# EUROPEAN PATENT APPLICATION

(11) **EP 1 804 484 A1**
(43) Date of publication of application: **04.07.2007**
(21) Application number: 06256612.0
(22) Date of filing: 28.12.2006
(51) Int. Cl.: H04N 1/32

(54) **Image processing device, image processing method, image processing system, and information recording medium**

(30) Priority: 28.12.2005 JP 2005380492; 25.12.2006 JP 2006348446
(71) Applicant: Ricoh Company, Ltd., Tokyo 143-8555 (JP)
(72) Inventor: Abe, Yasushi, Yokohama-shi, Kanagawa (JP); Ishii, Masaki, Kawasaki-shi, Kanagawa (JP); Yamamoto, Yohei, Tokyo (JP); Matsuno, Yoichiro, Yokohama-shi, Kanagawa (JP); Horikawa, Hirofumi, Yokohama-shi, Kanagawa (JP); Tsuda, Michihiko, Yokohama-shi, Kanagawa (JP); Endoh, Sanae, Tokyo (JP); Abe, Kanako, Tokyo (JP); Nozaki, Kenta, Tokyo (JP)
(74) Representative: Leeming, John Gerard

(57) **Abstract**

An image processing device is disclosed that includes an image reading unit to read a manuscript including image information and additional information related to the image information, an extraction unit to extract the image information and the additional information from manuscript image data of the manuscript, and a processing unit to perform processing on the image information based on the additional information.

## Description

### BACKGROUND OF THE INVENTION

### 1. Field of the Invention

The present invention relates to an image processing device, an image processing method, an image processing system, and an information recording medium, particularly, to an image processing device, an image processing method, an image processing system, and an information recording medium which performs image processing based on additional information extracted from an image.

### 2. Description of the Related Art

In the related art, when reading an image printed on a piece of paper, a bar code printed on the same paper is read at the same time. By reading information carried by the bar code, it is easy to set a transmission destination and copy conditions specific to a user.

For example, Japanese Laid-Open Patent Application No. 11-119597 (hereinafter, referred to as "reference 1") discloses a copier in which code information added at a certain location in an object image read by a reader is identified, and copy conditions corresponding to the code information are read out from a storage unit where plural copy conditions are stored, and the read-out copy conditions are set as the copy conditions when copying the above object image.

In addition, Japanese Laid-Open Patent Application No. 2004-343564 (hereinafter, referred to as "reference 2") discloses a facsimile machine which includes a two-dimensional bar code printing unit for recording, in a header of a document, various kinds of information input at the time of transmission, such as transmission destination, polling, broadcasting, number of documents, and a scanner for reading the document with two-dimensional bar code printed thereon.

However, in the techniques disclosed in reference 1 and reference 2, the code added in an image is either a preset bar code or a two-dimensional code, and the amount of information able to be carried by these kinds of codes is limited. Usually, information may be added to an object image by embedding the information into a dot pattern with some known methods, and this dot pattern may be added to the object image. With this technique, quite a large amount of information can be added to the object image. In the techniques disclosed in reference 1 and reference 2, however, information is added to an image by specific methods, and other methods for adding information are not considered.

In the techniques disclosed in reference 1 and reference 2, the devices carry out a certain number of processes specified in advance, such as copying or facsimile transmission, and the conditions under which the devices carry out the processing are designated. In other words, the techniques disclosed in reference 1 and reference 2 do not consider multiple processing and setting of multiple processing conditions, which are performed in a MPF (Multi Functional Peripheral) supporting multiple processes, or a PC (personal computer).

In addition, in the techniques disclosed in reference 1 and reference 2, the devices carry out a certain number of processes specified in advance, such as copying or facsimile transmission, and the conditions under which the devices carry out the processing are designated. In other words, the techniques disclosed in reference 1 and reference 2 do not consider multiple processing and setting of multiple processing conditions, which are performed in a MPF (Multi Functional Peripheral) supporting multiple processes, or a PC (personal computer).

In addition, in the techniques disclosed in reference 1 and reference 2, processing on an input document or a document image is defined, but an end user without special knowledge cannot deal with only information necessary to him, thus lacks of versatility. For example, such an end user cannot delete the information unnecessary to him.

In addition, in the techniques disclosed in reference 1 and reference 2, by using the two dimensional barcode, workload of a user is reduced because the user does not need to care about setting of processing conditions. However, the barcode itself is not a constituent part of the image, thus, when viewing the image, presence of the barcode in the image is not convenient to the user.

### SUMMARY OF THE INVENTION

An embodiment of the present invention may solve one or more problems of the related art.

A preferred embodiment of the present invention may provide an image processing device supporting multiple processes and multiple information addition methods, which is able to select one of plural processes and specify conditions of the selected process when acquiring, from image additional information, specific operations and conditions of the selected process, or additional information, and is more user-friendly and is of high versatility.

According to a first aspect of the present invention, there is provided an image processing device, comprising:
an image reading unit configured to read a manuscript including image information and additional information related to the image information;
an extraction unit configured to extract the image information and the additional information from manuscript image data of the manuscript;
a processing unit configured to perform processing on the image information based on the additional information.

According to a second aspect of the present invention, there is provided an image processing method, comprising:
an image reading step of reading a manuscript including image information and additional information related to the image information;
an extraction step of extracting the image information and the additional information from manuscript image data of the manuscript;
a processing step of performing processing on the image information based on the additional information.

According to a third aspect of the present invention, there is provided a computer program product for use in an image processing device, comprising:
a recording medium;
means recorded on the recording medium for reading a manuscript including image information and additional information related to the image information;
means recorded on the recording medium for extracting the image information and the additional information from manuscript image data of the manuscript;
means recorded on the recording medium for performing processing on the image information based on the additional information.

According to the above present invention, it is possible to set processing on the image information based on the additional information extracted from manuscript image data, and to perform processing on the image information extracted from manuscript image data.

These and other objects, features, and advantages of the present invention will become more apparent from the following detailed description of preferred embodiments given with reference to the accompanying drawings.

### BRIEF DESCRIPTION OF THE DRAWINGS

FIG. 1 is a block diagram illustrating a configuration of an image processing system according to a first embodiment of the present invention;
FIG. 2 is a block diagram illustrating a configuration of the image processing device 2000 according to the first embodiment;
FIG. 3 is a flowchart illustrating operations of the processing unit 2040 according to the first embodiment;
FIG. 4A and FIG. 4B are flowcharts illustrating operations of the image processing device 2000 according to the first embodiment;
FIG. 5 is a table illustrating an association table between the additional information 2 and the attribute of the additional information 2;
FIG. 6A and FIG. 6B are diagrams illustrating a method of removing a dot pattern additional information including isolated pixels;
FIG. 7A and FIG. 7B are diagrams illustrating the method of removing the dot pattern additional information including a dot combination;
FIG. 8A through FIG. 8C are data tables illustrating examples of a data structure of the additional information 2;
FIG. 9 is a data tables illustrating examples of the region information assigned to the "data 1" and the masking method assigned to the "data 2" variable;
FIG. 10 is a block diagram illustrating a configuration of an image processing system according to a second embodiment of the present invention;
FIG. 11 is a block diagram illustrating a configuration of the image processing device 200 according to the second embodiment;
FIG. 12 is a flowchart illustrating operations of the image processing device 200 for reading the recording information 90 and carrying out specified processes according to the second embodiment;
FIG. 13A and FIG. 13B are flowcharts illustrating operations of the transmission information generation unit 260 for generating a document to be transmitted based on the image additional information 92;
FIG. 14A and FIG. 14B are flowcharts illustrating operations of the storage information generation unit 270 for storing the image information 91 at a given position based on the image additional information 92;
FIG. 15A and FIG. 15B are flowcharts illustrating operations of the additional information acquisition unit 280 for acquiring the additional information based on the image additional information 92;
FIG. 16A through FIG. 16C are data tables illustrating examples of a data structure of the image additional information 92;
FIG. 17 is a diagram illustrating the image additional information 92 described in a descriptive language; and
FIG. 18 is a block diagram illustrating a computer for executing the image processing method of the second embodiment.

### DESCRIPTION OF THE PREFERRED EMBODIMENTS

Below, preferred embodiments of the present invention are explained with reference to the accompanying drawings.

### First Embodiment

In this embodiment, a manuscript is read, and image information including image data is obtained by reading the manuscript. Various processes are performed on the image information based on additional information. Here, "additional information" means information additionally embedded in the image information. As for the mode of the additional information, the additionally embedded information can be converted into specified codes or patterns readable by a reading device, and it may be a pattern not visually perceivable by human eyes. For example, the additional information may be a certain pattern formed by two-dimensional codes, such as, a bar code or a QR code, dots or a dot combination, or characters having modulated edge shapes, or modulated background colors. Certainly, the method of adding the additional information is not limited to the above examples, but may have various modifications depending on devices or operators.

Here, the image information extracted from an manuscript image corresponds to information expressed on the manuscript image, for example, documents or drawings created by using applications, such as, "WORD" (a registered trademark), or "POWER POINT" (a registered trademark), and may include any kind of information except for the above mentioned additional information.

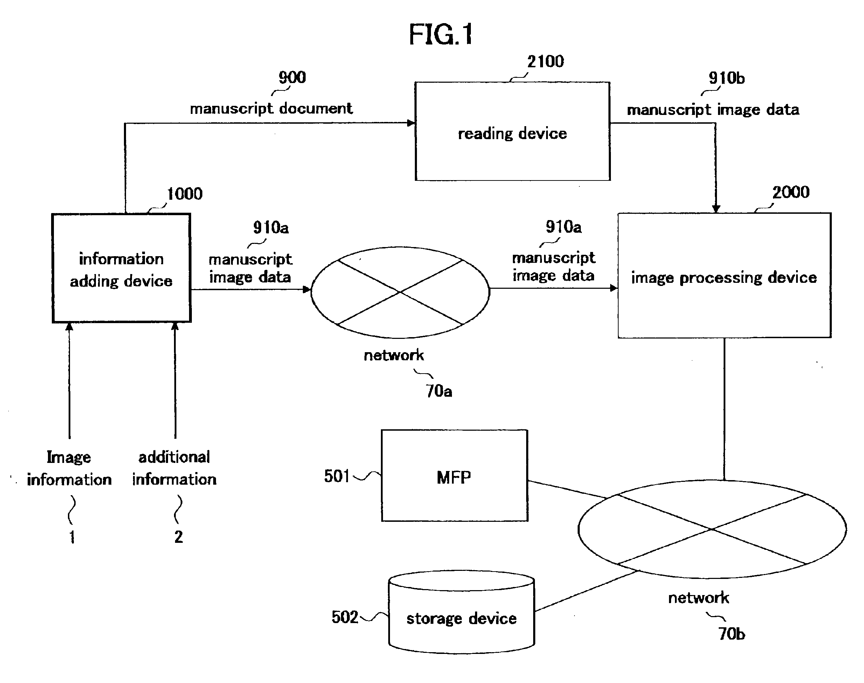

FIG. 1 is a block diagram illustrating a configuration of an image processing system according to a first embodiment of the present invention.

The image processing system shown in FIG. 1 includes an information adding device 1000, an image processing device 2000, a reading device 2100, which is connected to the image processing device 2000, an MFP (multi functional peripheral) 501, and a storage device 502.

The information adding device 1000 and the image processing device 2000 are connected through a network 70a, the image processing device 2000 is connected to the reading device 2100, and is connected to the MFP 501 and the storage device 502 through a network 70b.

The information adding device 1000 acquires image information 1 and additional information 2, and prints a manuscript document 900, which is obtained by adding the additional information 2 into the image information 1, and outputs manuscript image data 910a, which is also obtained by adding the additional information 2 into the image information 1. In other words, each of the manuscript document 900 and the manuscript image data 910a includes the image information 1 and the additional information 2.

The image processing device 2000 receives the manuscript image data 910a through the network 70a; the reading device 2100, for example, a scanner, reads the manuscript document 900 and obtains manuscript image data 910b; the manuscript image data 910b is input to the image processing device 2000. After receiving the manuscript image data 910a and 910b, the image processing device 2000 carries out appropriate processing.

It should be noted that even without going through the network 70a, the image processing device 2000 may receive the manuscript image data 910a and 910b from a storage medium, such as a floppy disk (not illustrated) or a SD card (registered trademark) (not illustrated).

The network 70a and the network 70b may be the Internet or an intranet. In addition, the network 70a and the network 70b are shown as different networks in FIG. 1, but the network 70a and the network 70b may be the same network.

The image processing device 2000 extracts the image information 1 and the additional information 2 from the manuscript image data 910a and 910b, and performs processing on the additional information 2.

### Configuration of Image Processing Device 2000

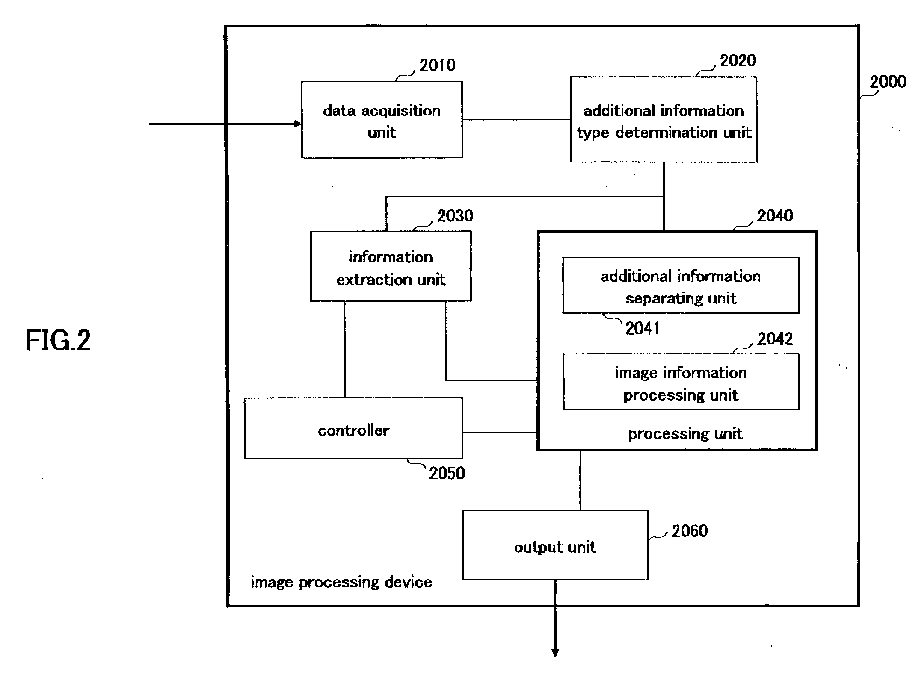

FIG. 2 is a block diagram illustrating a configuration of the image processing device 2000 according to the present embodiment.

For example, the image processing device 2000 is formed from a versatile computer, or a printer or an MFP installed with application.

As shown in FIG. 2, the image processing device 2000 includes a data acquisition unit 2010, an additional information type determination unit 2020, an information extraction unit 2030, a processing unit 2040, a controller 2050, and an output unit 2060.

The data acquisition unit 2010 acquires the manuscript image data 910a and 910b, which include the image information 1 and the additional information 2. The data acquisition unit 2010 may be integrated with the reading device 2100, or may be used as an interface (below, abbreviated as "I/F" where necessary) for inputting image data, or may be a device for reading manuscript image data stored in a storage device (not illustrated) of the reading device 2100.

The additional information type determination unit 2020 determines the type and attribute of the additional information when the additional information is readable, and outputs the determination results to the information extraction unit 2030 and the processing unit 2040.

Here, for example, the additional information may be a bar code, a two-dimensional code, such as, a QR code, a dot pattern, modulation of the shape of a character edge, or conversion of frequency in a high frequency region of the character edge. Certainly, the mode of the additional information is not limited to the above examples.

In addition, for example, the attribute of the additional information may be information indicating whether the additional information is visually perceivable by human eyes. For example, if usually presence of the additional information does not bother a user, and the additional information is visually perceivable only when the user pays close attention to it, this additional information is regarded to be not visually perceivable.

Usually, the bar code, the two-dimensional code, such as, the QR code, and the dot pattern are treated as modes readable by a reading device and visually perceivable by human eyes, and modulation of the shape of the character edge, or information embedding in terms of a frequency region are treated to be modes readable by a reading device but not visually perceivable by human eyes.

The information extraction unit 2030 extracts the additional information 2 based on the determination results from the additional information type determination unit 2020.

The processing unit 2040 performs processing on the image information 1 corresponding to the type and attribute of the additional information. Therefore, it is possible to improve accuracy of extraction of the image information 1 and the additional information 2, and increase speed of image processing. As shown in FIG. 2, the processing unit 2040 includes an additional information separation part 2041, and an image information processing part 2042. The additional information separation part 2041 separates the image information 1 and the additional information 2 in the manuscript image data in response to the determination results from the additional information type determination unit 2020, that is, the type and attribute of the additional information. As described above, the manuscript image data correspond to original image data which include the manuscript image data 910a, the manuscript image data 910b, and other image data, with the image information 1 and the additional information 2 embedded.

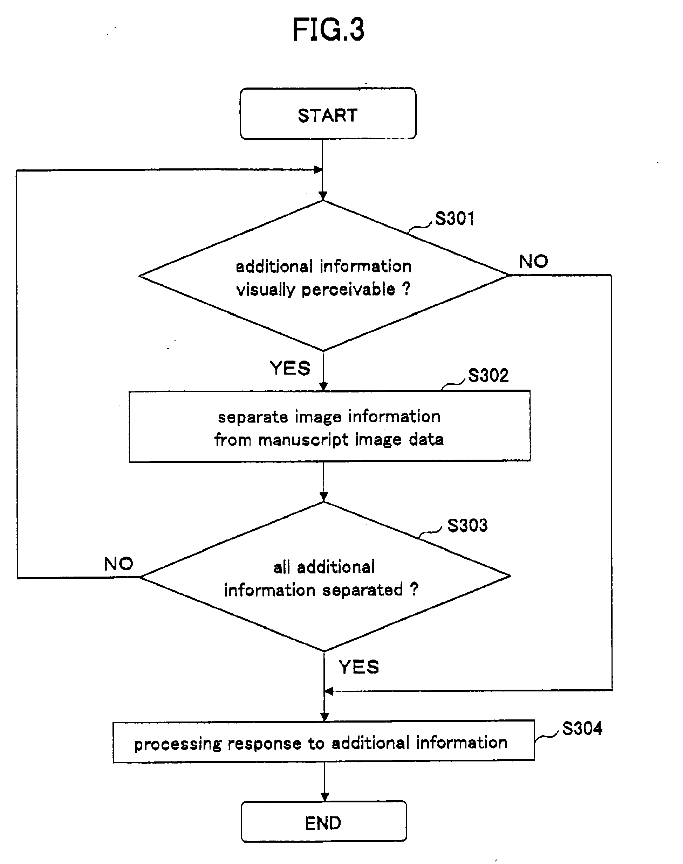

FIG. 3 is a flowchart illustrating operations of the processing unit 2040 according to the present embodiment.

As shown in FIG. 3, in step S301, the additional information separation part 2041 determines whether the additional information 2 is visually perceivable by human eyes. For example, the additional information separation part 2041 may made this determination based on the determination results from the additional information type determination unit 2020. If the additional information 2 is visually perceivable by human eyes, the routine proceeds to step S302, otherwise, the routine proceeds to step S304.

In step S302, the additional information separation part 2041 separates the image information 1 and the additional information 2 from the manuscript image data, and extracts the image information 1. Since this step is not executed if the additional information 2 is not visually perceivable by human eyes, as determined in step S301, the processing speed can be increased.

If the step S302 is omitted, that is, if the image information 1 and the additional information 2 from the manuscript image data are not separated, the subsequent processing would be performed on the manuscript image data including the additional information 2 but not on the image information 1 only, consequently, various processes are executed on both of the additional information 2 and the image information 1, which additional information 2 is not necessary to an non-specialist user. Therefore, by executing step S302, it is possible to provide a user-friendly image processing device. The operations in step S302 are described in detail below.

In step S303, it is determined whether the additional information separation part 2041 completely separated and removed the additional information 2 in the manuscript image data, and obtained the image information 1 without the additional information 2.

If the additional information separation part 2041 obtained the image information 1 without the additional information 2, the routine proceeds to step S304, otherwise, if the image information 1 still includes the additional information 2, the routine returns to step S301.

In step S304, the image information processing part 2042 performs processing on the image information 1 in response to the additional information 2 extracted by the information extraction unit 2030. Here, it should be noted that even for the manuscript image data, the additional information 2 of which is determined to be not visually perceivable by human eyes, the image information processing part 2042 performs the processing on the manuscript image data in response to the additional information 2 extracted by the information extraction unit 2030.

Returning to FIG. 2, the controller 2050 controls the processing unit 2040 to perform processing in accordance with the additional information 2 extracted by the information extraction unit 2030. Therefore, the image information 1 is processed in response to the additional information 2. In other words, the controller 2050 and the image information processing part 2042 implements processing, on the image information 1, defined by the additional information 2.

Processing defined by the additional information 2 is described below.

The output unit 2060 outputs the image information 1 based on the processing defined by the additional information 2.

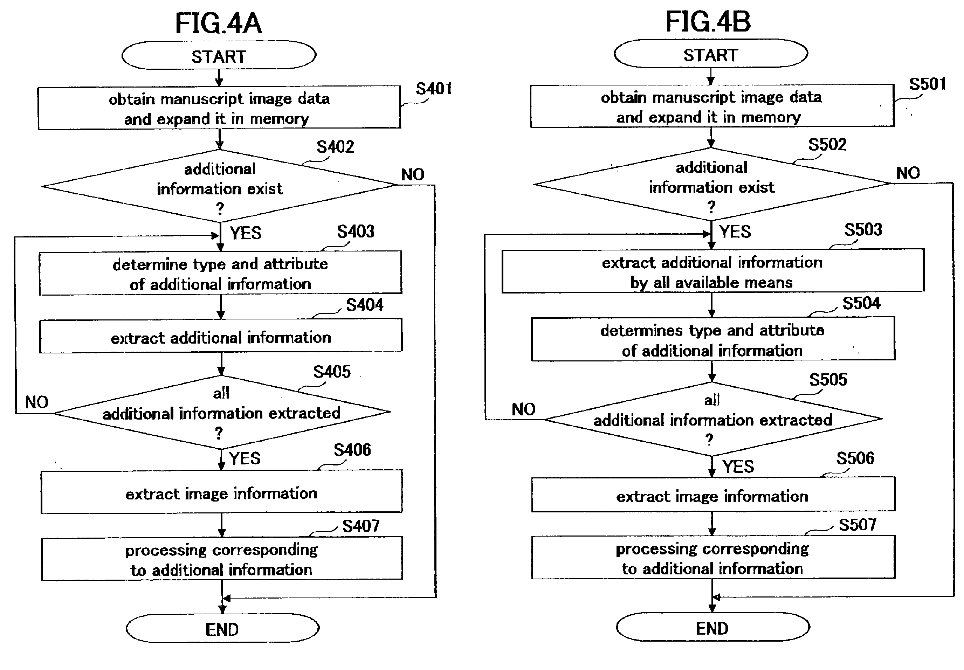

The constituent elements of the image processing device 2000 may be implemented by either hardware (such as electric circuits), or software. When the above components are implemented by software, the CPU of a computer reads out and executes relevant programs to perform operations shown in FIG. 4A and FIG. 4B. These programs may be stored beforehand in a not-illustrated storage device, such as a ROM (Read Only Memory), or a hard disk. Alternatively, these programs may be downloaded through a network. In addition, the data in a storage device, such as a CD-ROM, and a SD card (registered trademark), may be read out and stored in the storage device of the image processing device 2000.

FIG. 4A and FIG. 4B are flowcharts illustrating operations of the image processing device 2000 according to the present embodiment.

Specifically, FIG. 4A illustrates operations of extracting the additional information 2 after acquiring the type of the additional information 2 of the manuscript image data, and FIG. 4B illustrates operations of acquiring the type of the additional information 2 after the additional information 2 is extracted by a known method.

As shown in FIG. 4A, in step S401, the data acquisition unit 2010 obtains the manuscript image data, and expands the manuscript image data in a memory of the image processing device 2000.

In step S402, the additional information type determination unit 2020 determines whether the manuscript image data obtained in step 401 include the additional information 2. If the manuscript image data include the additional information 2, the routine proceeds to step S403, otherwise, the routine ends.

In step S403, the additional information type determination unit 2020 determines the type and attribute of the additional information. For example, a display may be provided to show a screen prompting the user to input the type of the additional information, and data input by the user may be used as the type of the additional information. When the additional information type determination unit 2020 supports only one type of the additional information, this type can be used adopted in the subsequent steps.

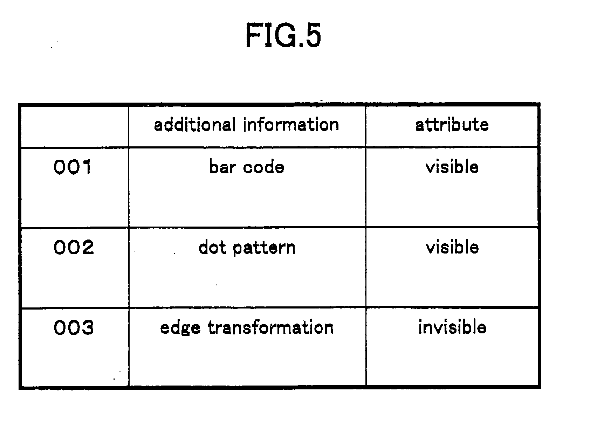

FIG. 5 is a table illustrating an association table between the additional information 2 and the attribute of the additional information 2.

The association table as shown in FIG. 5 is retained in a RAM, and the additional information type determination unit 2020 may refer to table in the RAM to determine the attribute of the additional information.

In step S404, the information extraction unit 2030 extracts the additional information 2 from the input manuscript image data. For example, the additional information 2 is extracted based on the type of the additional information 2. It should be noted that the method of extracting the additional information 2 is well-known, and explanation of it is omitted.

In step S405, it is determined whether the information extraction unit 2030 extracted all of the additional information 2 in the input manuscript image data. If all of the additional information 2 is extracted, the routine proceeds to step S406, if there is still some additional information un-extracted, the routine returns to step S403. It should be noted that if the number of the pieces of the additional information 2 in the input manuscript image data is predetermined, step S405 can be omitted.

In step S406, the processing unit 2040 extracts the image information 1 from the manuscript image data.

In step S407, the processing unit 2040 performs processing on the extracted image information 1 corresponding to the additional information 2.

Due to the operations from step S401 to step S407, the image information 1 in the manuscript image data is processed in response to the additional information 2 extracted from the manuscript image data.

The processing shown in FIG. 4B is nearly the same as that in FIG. 4A, except that step S503 and step 504 are different from step S403 and step 404. Below, only these two steps are explained.

In step S503, the information extraction unit 2030 attempts to extract the additional information 2 by all available means.

In step S504, the additional information type determination unit 2020 determines the type and attribute of the extracted additional information 2 based on the determination results of the additional information obtained in step S503.

In FIG. 4A and FIG. 4B, if the additional information 2 is set in advance, or functions of the image processing device 2000 are specified, processing in the additional information type determination unit 2020 may be omitted. In this case, the image information 1 in the manuscript image data is processed in response to the preset additional information 2.

### Removing Additional Information

Below, an explanation is made of a procedure of removing the additional information 2 from the manuscript image data mentioned in step S302 in FIG. 3, step S406 in FIG. 4A, and step S506 in FIG. 4B.

### (1) bar code or QR code additional information 2

When the additional information 2 is a bar code, or a two-dimensional code, such as a QR code, first, template matching is performed for the input manuscript image data by using a template of a bar code or a two-dimensional code, which template is stored in a storage device, such as a RAM of the image processing device 2000, thereby, obtaining similarity. Then, if the similarity of a region is greater than a specified threshold, this region is identified to be a bar code, or a two-dimensional code, like a QR code. Next, the pixel value of the region identified to be a bar code are transformed into the pixel value of the background region of the manuscript image data, thereby the image of the additional information 2 is removed from the manuscript image data, and the image information 1 is obtained from the manuscript image data.

Because usually the color of the background region of the manuscript image data is white, it may be specified that the pixel value of the target region be transformed into the value of white pixels. Further, a background color extraction means may be provided to extract the pixel value of the background of the manuscript image data, and the pixel value of the target region can be transformed into the extracted background pixel value, thereby the image of the additional information 2, like a bar code, is removed from the manuscript image data, and the image information 1 is obtained from the manuscript image data.

### (2) dot pattern additional information 2

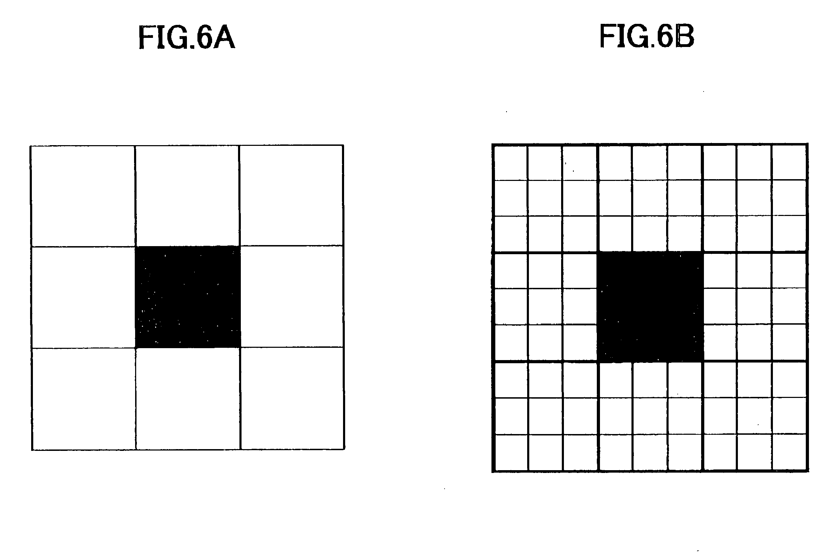

FIG. 6A and FIG. 6B are diagrams illustrating a method of removing a dot pattern additional information including isolated pixels.

As shown in FIG. 6A and FIG. 6B, an isolated pixel is detected from the input manuscript image data. In addition, an isolated pixel is extracted by determining whether eight pixels adjacent to a target pixel have the same pixel value. In FIG. 6A, it is illustrated that one pixel is used for isolation detection (in other words, in unit of one pixel), and in FIG. 6B, it is illustrated that nine pixels are used for isolation detection (in other words, in unit of nine pixels), however, the present embodiment is not limited to this. For example, a number of pixels stored in a RAM or other storage device can be used for isolation detection. Further, when the manuscript image data correspond to a color image, and the target pattern is formed by pixels having preset values, these pixels having the preset values can be used for isolation detection.

Alternatively, a connected pixel component can be extracted from the manuscript image data, and when the area or the diameter of the extracted connected pixel component is less than a preset threshold value, the connected pixel component is regarded as the image of the additional information 2, which is formed by a specified pattern expressed by dots or a combination of dots.

Next, the pixel value of the extracted isolated pixel is transformed into the pixel value of the background region of the manuscript image data, thereby the image of the additional information 2, which is formed by a specified pattern expressed by dots or a combination of dots, is removed from the manuscript image data, and the image information 1 is obtained from the manuscript image data.

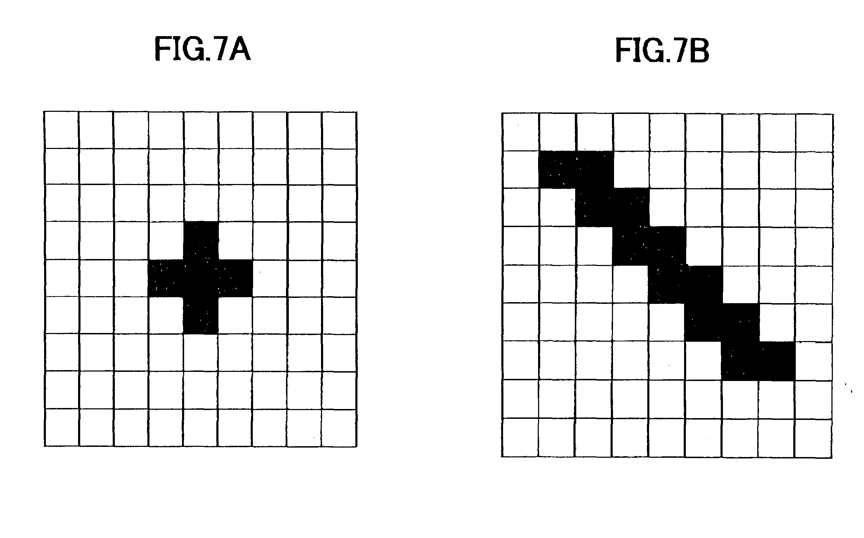

FIG. 7A and FIG. 7B are diagrams illustrating the method of removing the dot pattern additional information including a dot combination.

As shown in FIG. 7A and FIG. 7B, a pattern expressed by a dot combination is not a square, as shown in FIG. 6A and FIG. 6B. For such a dot combination pattern, the following processes can be executed.

First, a dot combination pattern stored in a storage device, like a RAM, is read out, and it is determined whether a pattern equal or similar to the dot combination pattern read out from the RAM exists in the input manuscript image data. If a pattern the same or similar to the dot combination pattern read out from the RAM exists in the input manuscript image data, the pixel value of the existing pattern in the manuscript image data is transformed into the pixel value of the background region of the manuscript image data, thereby the image of the additional information 2, which is formed from a dot combination pattern, is removed from the manuscript image data, and the image information 1 is obtained from the manuscript image data. Note that, similar to the case of the bar code additional information, a background color extraction means may be provided to carry out the above processing.

Alternatively, a connected pixel component can be extracted from the manuscript image data, and when the area or the diameter of the extracted connected pixel component is less than a preset threshold value, the connected pixel component is regarded as the image of the additional information 2, which is formed by a specified pattern expressed by dots or a combination of dots.

Next, the pixel value of the extracted isolated pixel is transformed into the pixel value of the background region of the manuscript image data, thereby the image of the additional information 2, which is formed by a specified pattern expressed by dots or a combination of dots, is removed from the manuscript image data, and the image information 1 is obtained from the manuscript image data.

When the manuscript image data correspond to a color image, and the target pattern is formed by pixels having preset values, the above processing can be made using these pixels having the preset values.

### Processing in Response to Additional Information

Next, the additional information 2 and processing in response to the additional information 2 are described.

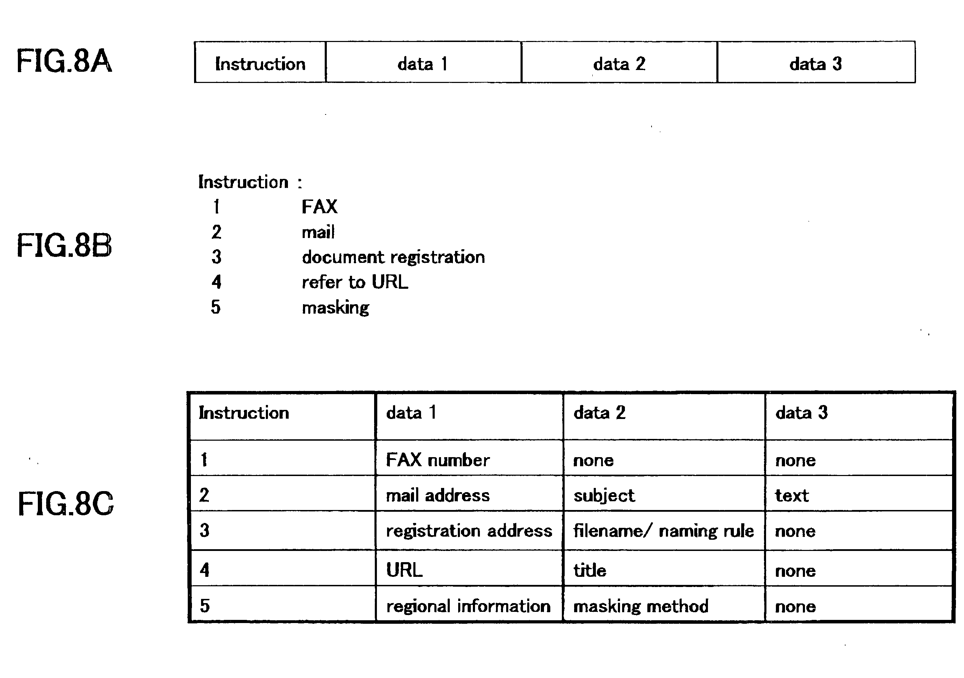

FIG. 8A through FIG. 8C are data tables illustrating examples of a data structure of the additional information 2.

Specifically, FIG. 8A is a table illustrating an example in which the additional information 2 includes a series of variables of a given byte-length.

In FIG. 8A, the first variable represents "instruction", and the following variables represent information necessary when executing the instruction.

FIG. 8B is a table illustrating that the "instruction" variable is expressed by a binary or ASCII variable.

For example, when directing facsimile transmission of the image information 1, the "instruction" variable equals "1".

FIG. 8C is a table illustrating the meaning of the variables following the variable "instruction".

In FIG. 8C, for example, when directing facsimile transmission of the image information 1, the "instruction" variable equals "1", and the corresponding facsimile number of the recipient is assigned to the "data 1" variable.

In addition, for example, when directing masking of the image information 1, the "instruction" variable equals "5", the corresponding region information is assigned to the "data 1" variable, and the data of the masking method is assigned to the "data 2" variable.

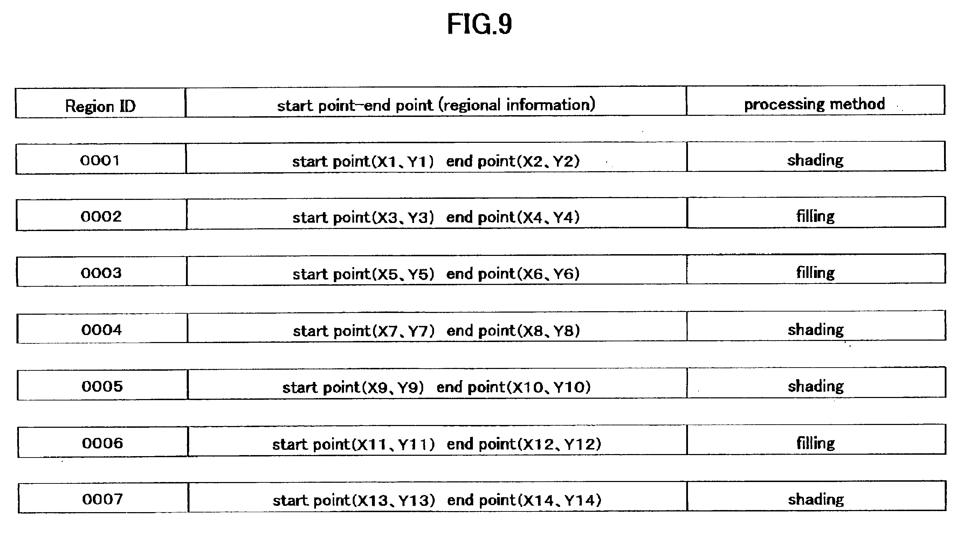

FIG. 9 is a data tables illustrating examples of the region information assigned to the "data 1" and the masking method assigned to the "data 2" variable.

In the table in FIG. 9, each region ID is associated with a quantity "start point - end point (region information)", and a quantity "processing method". The quantity "start point - end point (region information)" indicates coordinates of a region having the corresponding region ID. In examples shown in FIG. 9, all of the regions are defined to be rectangle, and, for example, the coordinates of the left-bottom vertex and the right-top vertex are assigned to the quantity "start point - end point (region information)", thereby, defining the target region.

The quantity "processing method" is information for specifying the masking method, such as filling or using of desired patterns. In the table in FIG. 9, shading or filling is specified for each region.

In this way, for each region ID, a value of the quantity "start point - end point (region information)" is assigned to the "data 1" variable, and a value of the quantity "processing method" is assigned to the "data 2" variable, thereby, constructing the additional information 2 for specifying the method of masking.

In the above, examples of the additional information 2 and the processing in response to the additional information 2 are described for illustration, however, the present embodiment is not limited to the above examples, but can have various modifications.

For examples, when the additional information 2 is formed from the "data 1" variable in FIG. 8C, the image processing device 2000 may determine the specific instruction based on the additional information 2 extracted by the information extraction unit 2030.

For example, if the additional information 2 is merely a number including a series of figures constituting a facsimile number, the processing in response to this additional information 2 is identified to be transmitting the image information 1 by facsimile, and in response to this information, the image information 1 is transmitted by facsimile.

If the additional information 2 is merely a character string including "@", the character string including "@" can be identified as an email address, and the processing in response to this additional information 2 is identified to be sending the image information 1, by email, to an address specified by the character string including "@"; in response to this information, a mail transmission processing is carried out. The mail transmission processing may be any processing for transmitting a mail, for example, send the image information 1 by email, or display a mail-editing screen showing a text with the image information 1 being inserted, or register the image information 1 as an attachment of an email, or a combination of the above processes.

In addition, for example, if the additional information 2 includes both a character string including "@", and another character string, the character string including "@" can be identified as an email address, and the other character string can be identified as a title of an email.

If the additional information 2 is a string of alphabetic characters including the symbols "/", or "¥", the alphabetic character string can be identified as an address of a location for registering the image information 1, accordingly, the image information 1 is stored at this address.

It should be noted that each additional information 2 may correspond to plural processing. For example, the processing in response to this additional information 2 may include both of transmitting the image information 1 by facsimile and masking. Alternatively, the processing in response to this additional information 2 may include both of transmitting the image information 1 by facsimile and transmitting an email.

### Second Embodiment

### Configuration of Image Processing System

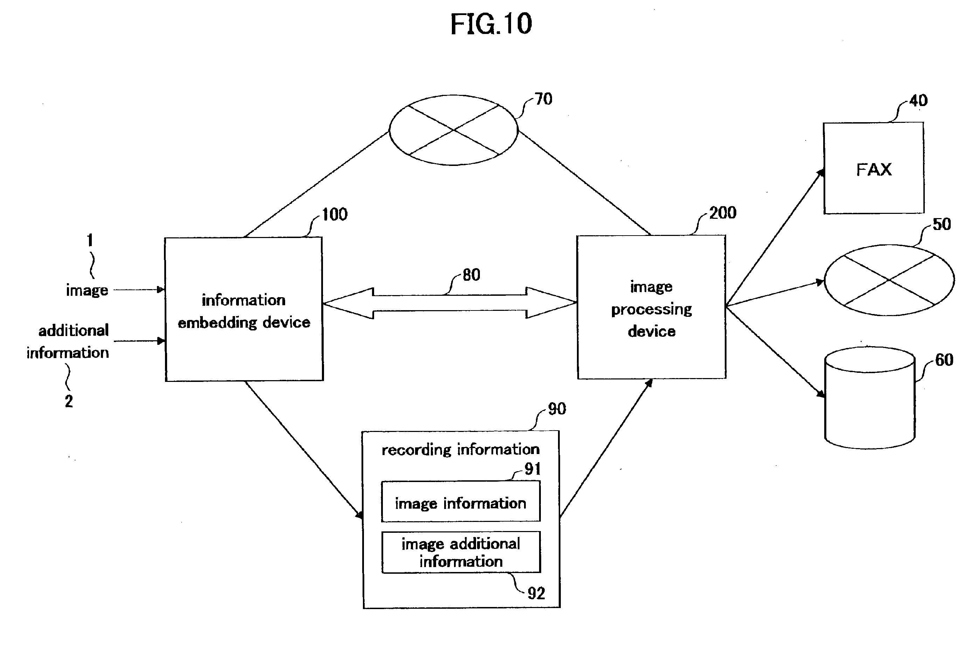

FIG. 10 is a block diagram illustrating a configuration of an image processing system according to a second embodiment of the present invention.

In the image processing system shown in FIG. 10, an information embedding device 100 outputs recording information 90, and an image processing device 200 reads the recording information 90 to carry out processing.

In FIG. 10, it is illustrated that the information embedding device 100 and the image processing device 200 are connected by a network 70 and a local bus 80, but the information embedding device 100 and the image processing device 200 may be connected by either the network 70 or the local bus 80, or the connection between the information embedding device 100 and the image processing device 200 may be omitted. In addition, the information embedding device 100 and the image processing device 200 may be integrated to serve as an information embedding and image processing device.

As shown in FIG. 10, the information embedding device 100 acquires image data of an image 1 (the same as the image information 1 in the first embodiment) and additional information 2, and embeds the additional information 2, or coded data of the additional information 2 into the image data of the image 1 to generate the recording information 90. The recording information 90 includes image information 91, which is the image data of the image 1, and image additional information 92, which is the additional information 2, or the coded data of the additional information 2.

The correspondence relation between the components of the image processing system of the second embodiment and the components of the image processing system of the first embodiment is below.

The information embedding device 100 corresponds to the information adding device 1000, the image processing device 200 corresponds to the image processing device 2000, the recording information 90 corresponds to the manuscript image data 910a and the manuscript document 900, the image reading unit 210 corresponds to the data acquisition unit 2010, the image additional information acquisition unit 230 corresponds to the information extraction unit 2030, and the processing unit 240 corresponds to the processing unit 2040.

The additional information 2 can be embedded by the following methods. For example, a bar code or a QR code may be produced from the additional information 2, and the bar code or the QR code may be embedded. Alternatively, data of the additional information 2 may be encoded and made invisible and embedded. As for the methods of making the additional information 2 invisible, the additional information 2 may be embedded into a dot pattern, and the dot pattern may be added as background of the image 1. Alternatively, the additional information 2 may be embedded into the image 1 as a digital watermark.

By making the additional information 2 invisible, which is the image additional information 92 included in the generated recording information 90, it is possible to prevent the additional information 2 from being viewed by others when the additional information 2 is used in processing in the image processing device 200, and when the recording information 90 is read into the image processing device 200.

The image processing device 200 reads the recording information 90 and executes certain processes in response to the recording information 90. The image processing device 200 is connected to a facsimile machine 40, a network 50, and a storage device 60. The recording information 90 may be input to the image processing device 200 when an image printed on a piece of paper or other media is read by the image processing device 200; alternatively, the recording information 90 may be input to the image processing device 200 from the information embedding device 100 through the network 70 or the local bus 80. The image processing device 200 extracts the image information 91 and the image additional information 92 from the recording information 90, and executes certain processes in response to the image additional information 92.

### Configuration of Image Processing Device 200

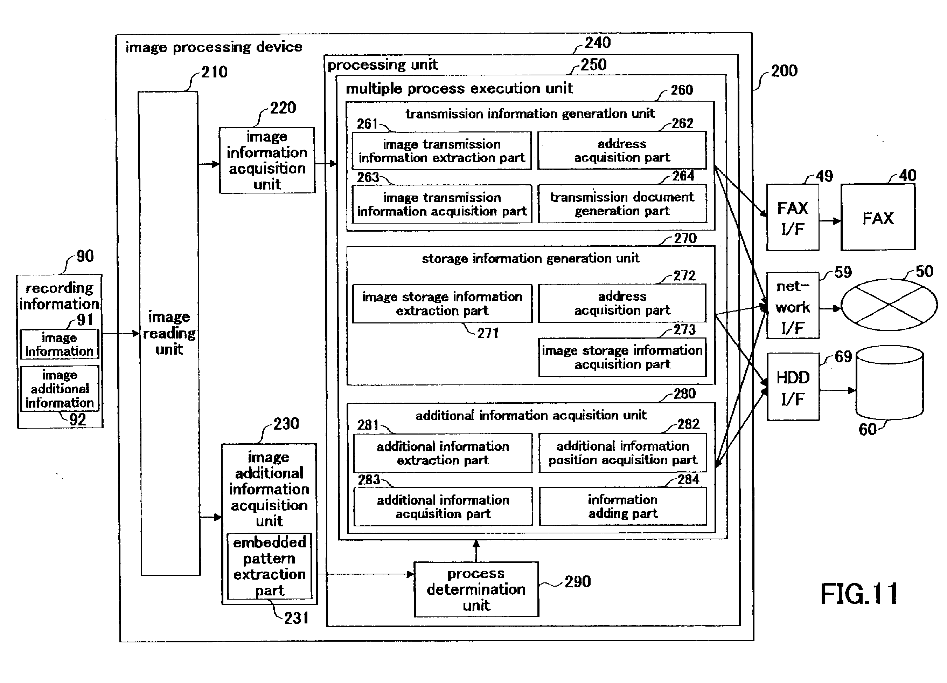

FIG. 11 is a block diagram illustrating a configuration of the image processing device 200 according to the present embodiment.

As shown in FIG. 11, the image processing device 200, which is connected to the facsimile machine 40 and other devices, reads the recording information 90 and outputs certain signals to the facsimile machine 40 and other devices.

Specifically, the image processing device 200 is connected to the facsimile machine 40, the network 50, and the storage device 60 through a facsimile I/F 49, a network I/F 59, and a storage device I/F 69, respectively.

The image processing device 200 includes a processing unit 240, an image reading unit 210, an image additional information acquisition unit 230, and an image information acquisition unit 220.

The processing unit 240 selects one of plural processes to be executed by the image processing device 200 and executes the process. The processing unit 240 includes a multiple process execution unit 250 and a process determination unit 290.

The multiple process execution unit 250 serves as a main processing section of plural processes to be executed by the image processing device 200, and includes a transmission information generation unit 260, a storage information generation unit 270, and an additional information acquisition unit 280.

### Transmission of Facsimile or Mail

The transmission information generation unit 260 generates transmission information used for transmitting the image information 91, and includes an image transmission information extraction part 261, an address acquisition part 262, an image transmission information acquisition part 263, and a transmission document generation part 264.

The transmission information generated by the transmission information generation unit 260 is in correspondence to a transmission device designated by the image additional information 92, and can be used in any kind of transmission device, such as a transmission device, a facsimile transmission device, and others. For example, the transmission information may include a transmission address to which the image information 91 is to be transmitted, a title of the image information 91 to be transmitted, or an address of the transmission side.

The image transmission information extraction part 261 extracts the transmission information from the image additional information 92 when a designation of transmitting an image and the transmission information are included in the image additional information 92.

The address acquisition part 262 acquires a transmission information address, which indicates the position for storing the transmission information, when a designation of transmitting an image and the transmission information address are included in the image additional information 92.

The image transmission information acquisition part 263 accesses the transmission information address given by the address acquisition part 262 to obtain the transmission information. Here, the transmission information address may be a path name or a file name in a storage device (not-illustrated) of the image processing device 200, or a path name or a file name in the storage device 60 connected to the image processing device 200, or a URI (Uniform Resource Identifier) on the network 50 connected to the image processing device 200.

The transmission document generation part 264 creates a document to be transmitted based on the transmission information when the image transmission information extraction part 261 or the image transmission information acquisition part 263 obtains the transmission information. For example, when the transmission device specified in the image additional information 92 is a facsimile machine, the transmission document generation part 264 creates a header for facsimile transmission. When the transmission device specified in the image additional information 92 is a mailer, the transmission document generation part 264 creates a mail header. Then the transmission document generation part 264 adds the header or mail header to the image information 91 to complete the document to be transmitted.

The document created by the transmission document generation part 264 is transmitted by means specified in the image additional information 92 via the facsimile I/F 49 or the network I/F 59.

### Transmission of Facsimile or Mail

The storage information generation unit 270, which stores the image information 91 in a designated position, includes an image storage information extraction part 271, an address acquisition part 272, and an image storage information acquisition part 273. The storage information generated by the storage information generation unit 270 is an address for storing the image information, and may be a path name, and/or a server name, a file name assigned to the image information 91, or the name of the manager of files of the image information 91. The storage information may also be the address itself for storing the image information 91, and a URI.

The image storage information extraction part 271 extracts the storage information from the image additional information 92 when a designation of storing an image and the storage information are included in the image additional information 92.

The address acquisition part 272 acquires, from the image additional information 92, a storage information address, which indicates a position for storing the storage information, when the designation of storing an image and the storage information address are included in the image additional information 92.

The image storage information acquisition part 273 accesses the storage information address given by the address acquisition part 272 to obtain the storage information. For example, the storage information address may be a path name or a file name in a storage device (not-illustrated) of the image processing device 200, a path name or a file name in the storage device 60 connected to the image processing device 200, or a URI (Uniform Resource Identifier) on the network 50 connected to the image processing device 200.

The transmission document created by the storage information generation unit 270 is stored at an address specified in the image additional information 92 via the network I/F 59 or the storage device I/F 69.

### Acquisition of Information via Network

The additional information acquisition unit 280 acquires the additional information, which is information specified by the image additional information 92, and generates an image by combining the additional information and the image information 91. The additional information acquisition unit 280 includes an additional information extraction part 281, an additional information position acquisition part 282, an additional information acquisition part 283, and an information adding part 284. The additional information obtained by the additional information acquisition unit 280 may be a text, an image, or an URI on a network retaining the text or the image.

The additional information extraction part 281 extracts the additional information from the image additional information 92 when a designation of acquiring the additional information and the additional information are included in the image additional information 92.

The additional information position acquisition part 282 acquires an additional information address, which indicates a position for storing the additional information, when the designation of acquiring the additional information and the additional information address are included in the image additional information 92.

The additional information acquisition part 283 accesses the additional information address given by the additional information position acquisition part 282 to obtain the additional information. For example, the additional information address may be a path name or a file name in a storage device (not-illustrated) of the image processing device 200, or a path name or a file name in the storage device 60 connected to the image processing device 200, or a URI (Uniform Resource Identifier) on the network 50 connected to the image processing device 200.

The information adding part 284 combines the image information 91 and the additional information given by the additional information extraction part 281 or the additional information position acquisition part 282 into one image. The image created by the information adding part 284 is displayed, or printed, or transmitted by means specified in the image additional information 92.

The process determination unit 290, based on the methods specified in the image additional information 92, determines which processor of plural processors of the multiple process execution unit 250 is to be operated.

The image additional information acquisition unit 230 is for acquiring the image additional information 92 from the image read by the image reading unit 210, and includes an embedded pattern extraction part 231. The image additional information acquisition unit 230 acquires text by OCR processing, acquires information by reading a bar code or a QR code, or acquires information by extracting digital watermark embedded in the image information 91.

The embedded pattern extraction part 231 acquires information by extracting information embedded in an image by using a dot pattern. For example, the information can be embedded in the image by forming the dot pattern according a predetermined rule.

The image reading unit 210 reads an image carrying the input recording information 90. The image information acquisition unit 220 acquires image information 91 corresponding to the image obtained by the image reading unit 210. In addition, the image information acquisition unit 220 may perform the OCR processing on the image read by the image obtained by the image reading unit 210, and obtain the resulting text data.

The facsimile I/F 49, the network I/F 59, and the storage device I/F 69 are respective interfaces between the facsimile machine 40, the network 50, the storage device 60 and the image processing device 200.

### Operation Flow

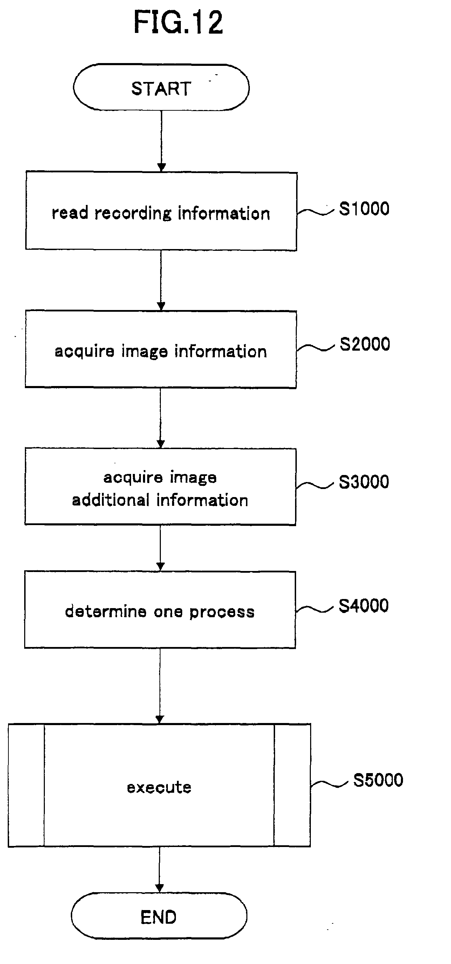

FIG. 12, FIG. 13, FIG. 14, and FIG. 15 are flowcharts illustrating operations of the image processing device 200 according to the present embodiment.

### Operation Flow of Image Processing Device 200

FIG. 12 is a flowchart illustrating operations of the image processing device 200 for reading the recording information 90 and carrying out specified processes according to the present embodiment.

As shown in FIG. 12, in step S1000, the image reading unit 210 reads an image carrying the input recording information 90.

In step S2000, the image information acquisition unit 220 acquires the image information 91 corresponding to the image obtained by the image reading unit 210.

In step S3000, the image additional information acquisition unit 230 extracts the image additional information 92 from the image read by the image reading unit 210. When the image additional information 92 includes letters or symbols, a bar code, a QR code, a dot pattern, or other visible marks added in the input recording information 90, these visible marks can be removed from the image additional information 92.

In step S4000, the process determination unit 290, based on the image additional information 92, selects and determines the process to be executed in the multiple process execution unit 250.

In step S5000, the multiple process execution unit 250 performs processing based on output of the process determination unit 290 and the image additional information 92.

### Operation Flow of Transmission Information Generation Unit 260

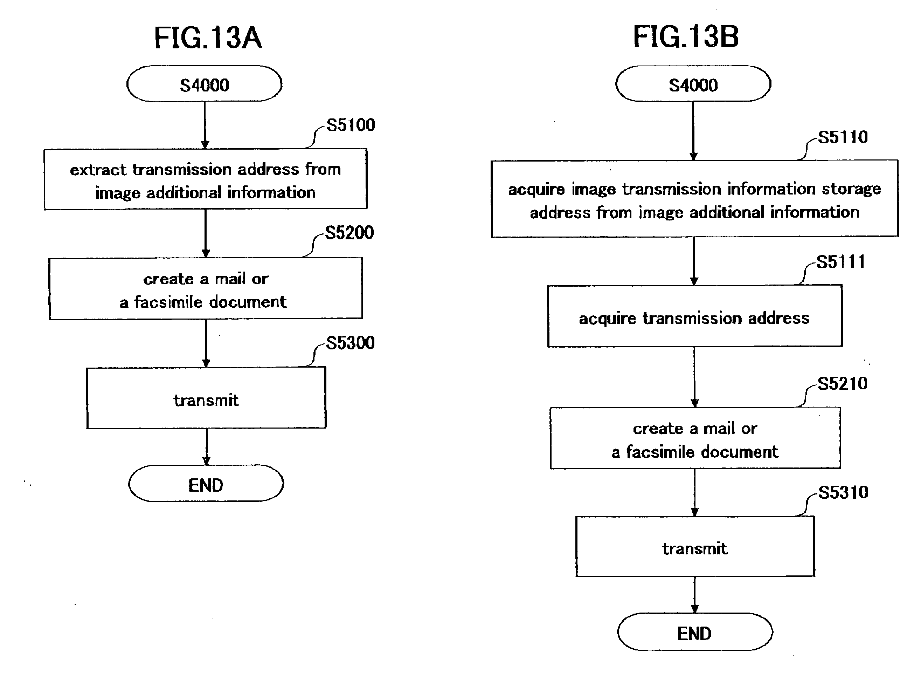

FIG. 13A and FIG. 13B are flowcharts illustrating operations of the transmission information generation unit 260 for generating a document to be transmitted based on the image additional information 92.

Specifically, FIG. 13A is a flowchart illustrating operations of the image processing device 200 when the transmission information is included in the image additional information 92, and FIG. 13B is a flowchart illustrating operations of the image processing device 200 when the address for storing the transmission information is included in the image additional information 92.

As shown in FIG. 13A, in step S5100, the image transmission information extraction part 261 extracts the transmission information from the image additional information 92.

In step S5200, from the extracted transmission information and the image information 91, the transmission document generation part 264 creates a document corresponding to the transmission device specified in the image additional information 92, such as a facsimile machine or a mailer. Note that the transmission device may be specified from an input device (not illustrated).

In step S5300, the document created by the transmission document generation part 264 is transmitted to a target transmission address specified in the transmission information via the facsimile I/F 49 or the network I/F 59.

As shown in FIG. 13B, in step S5110, from the image additional information 92, the address acquisition part 262 extracts a transmission information address, which indicates the position for storing the transmission information.

In step S5111, the image transmission information acquisition part 263 accesses the transmission information address given by the address acquisition part 262 to obtain the transmission information including the transmission information address.

In step S5210, from the transmission information obtained in step S5211 and the image information 91, the transmission document generation part 264 creates a document corresponding to the transmission device, which is specified in the image additional information 92 or the transmission information. Note that the transmission device may be specified from an input device (not illustrated).

In step S5310, the document created by the transmission document generation part 264 is transmitted to a target transmission address specified in the transmission information via the facsimile I/F 49 or the network I/F 59.

### Operation Flow of Storage Information Generation Unit 270

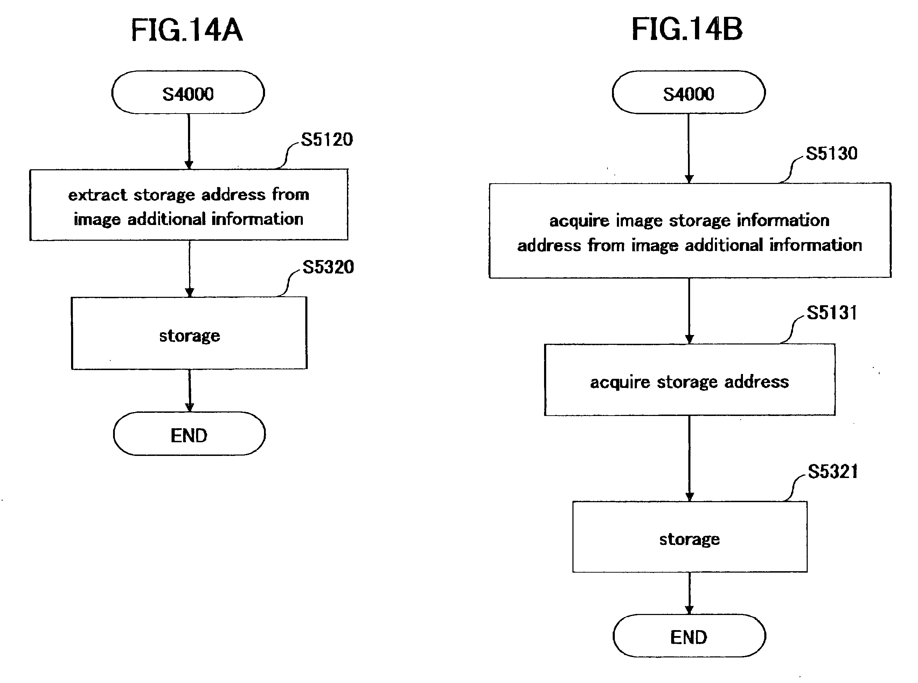

FIG. 14A and FIG. 14B are flowcharts illustrating operations of the storage information generation unit 270 for storing the image information 91 at a given position based on the image additional information 92.

Specifically, FIG. 14A is a flowchart illustrating operations of the storage information generation unit 270 when the storage information is included in the image additional information 92, and FIG. 14B is a flowchart illustrating operations of the storage information generation unit 270 when the address for storing the storage information is included in the image additional information 92.

As shown in FIG. 14A, in step S5120, the image storage information extraction part 271 extracts the storage information from the image additional information 92.

In step S5320, based on the storage information extracted in step S5120, the image information 91 is stored at a given position in the storage device 60 connected to the image processing device 200 via the storage device I/F 69. Note that instead of the storage device 60, the image information 91 may be stored at a given position in a not-illustrated storage device existing on the network 50 connected to the image processing device 200 via the network I/F 59.

As shown in FIG. 14B, in step S5130, from the image additional information 92, the address acquisition part 272 extracts a storage information address, which indicates the position for storing the storage information.

In step S5131, the image storage information acquisition part 273 accesses the transmission information address obtained in step 5130 to obtain the storage information.

In step S5321, based on the storage information extracted in step S5131, the image information 91 is stored at a given position in the storage device 60 connected to the image processing device 200 via the storage device I/F 69. Note that instead of the storage device 60, the image information 91 may also be stored at a given position in a not-illustrated storage device existing on the network 50 connected to the image processing device 200 via the network I/F 59.

### Operation Flow of Additional Information Acquisition Unit 280

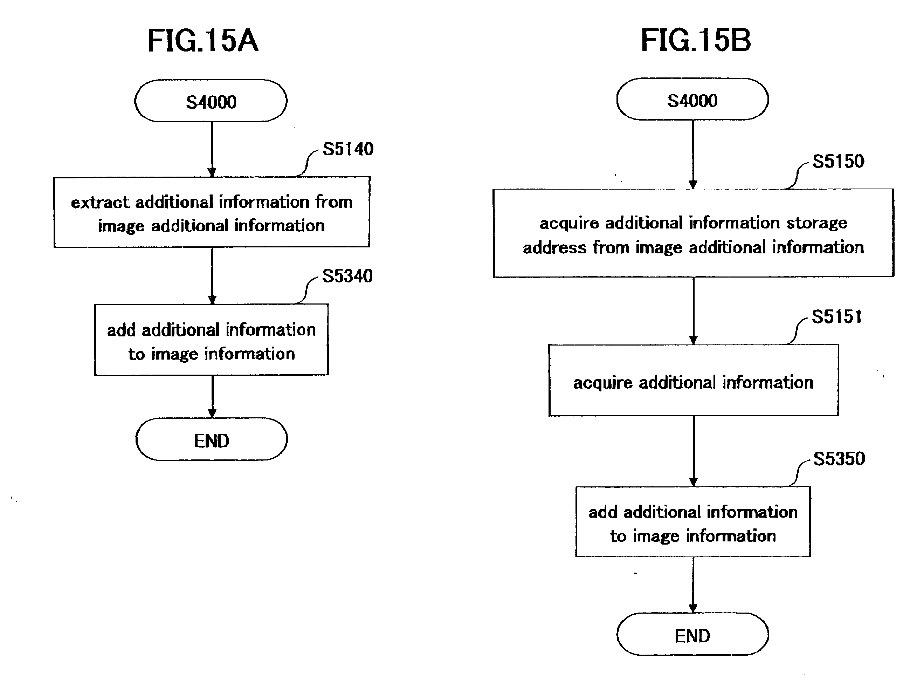

FIG. 15A and FIG. 15B are flowcharts illustrating operations of the additional information acquisition unit 280 for acquiring the additional information based on the image additional information 92.

Specifically, FIG. 15A is a flowchart illustrating operations of the additional information acquisition unit 280 when the additional information is included in the image additional information 92, and FIG. 15B is a flowchart illustrating operations of the additional information acquisition unit 280 when the address for storing the additional information is included in the image additional information 92.

As shown in FIG. 15A, in step S5140, the additional information extraction part 281 extracts the additional information from the image additional information 92.

In step S5340, the information adding part 284 adds the additional information obtained in step S5140 to the image information 91 to generate an image.

As shown in FIG. 15B, in step S5150, the additional information position acquisition part 282 extracts an additional information address, which indicates the position for storing the additional information.

In step S5151, the additional information acquisition part 283 accesses the additional information address obtained in step S5150 to obtain the additional information.

In step S5350, the information adding part 284 adds the additional information obtained in step S5151 to the image information 91 to generate an image.

### Data structure of Image Additional Information

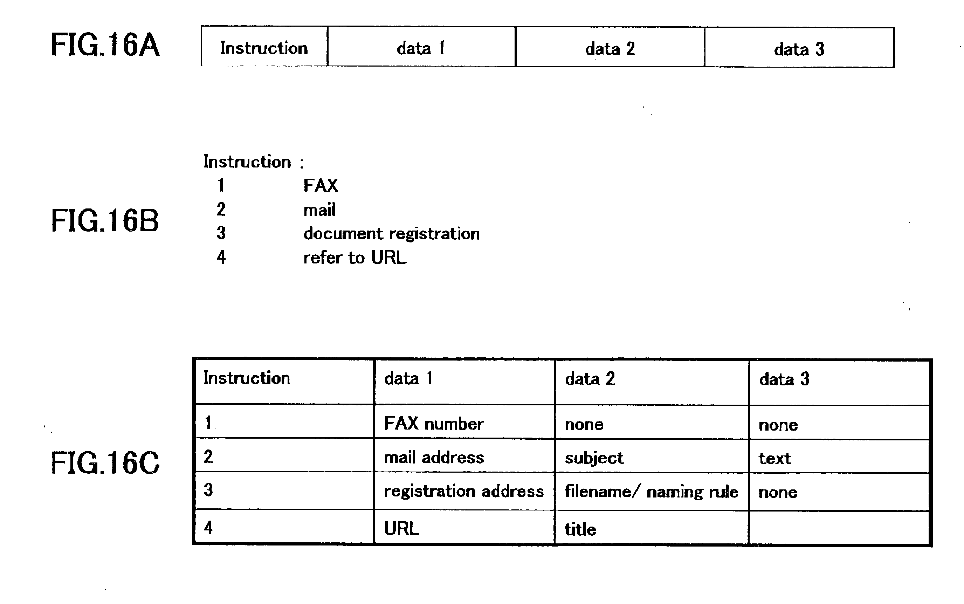

FIG. 16A through FIG. 16C are data tables illustrating examples of a data structure of the image additional information 92.

Specifically, FIG. 16A is a table illustrating an example in which the image additional information 92 includes a series of variables of a given byte-length.

In FIG. 16A, the first variable represents "instruction", and the following variables represent information necessary when executing the instruction.

FIG. 16B is a table illustrating that the "instruction" variable is expressed by a binary or ASCII variable.

For example, when directing facsimile transmission, the "instruction" variable equals "1".

FIG. 16C is a table illustrating the meaning of the variables following the variable "instruction".

In FIG. 16C, for example, when directing facsimile transmission, the "instruction" variable equals "1", and the corresponding facsimile number of the recipient is assigned to the "data 1" variable.

### Descriptive Language of Image Additional Information

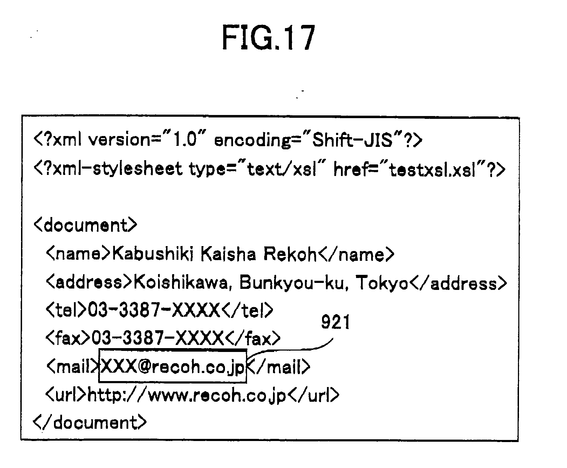

FIG. 17 is a diagram illustrating the image additional information 92 described in a descriptive language.

In FIG. 17, a character string 921 represents a mail address for transmitting an e-mail message.

In FIG. 16A through FIG. 16C, and in FIG. 17, the specific operation to be performed by the image processing device 200 is explicitly stored in the image additional information 92; but the present invention is not limited to this. For example, as shown by the character string 921 in FIG. 17, when there is a character string including the symbol "@" in the image additional information 92, image transmission information can be generated for mail transmission with this character string as the target address of e-mail transmission. In addition, when there is a character string including the symbol "/" or "¥" in the image additional information 92, the image storage information can be generated for storing the image information 91 with this character string as the address for storing the image information 91.

### Computer Configuration descriptive Language of Image Additional Information

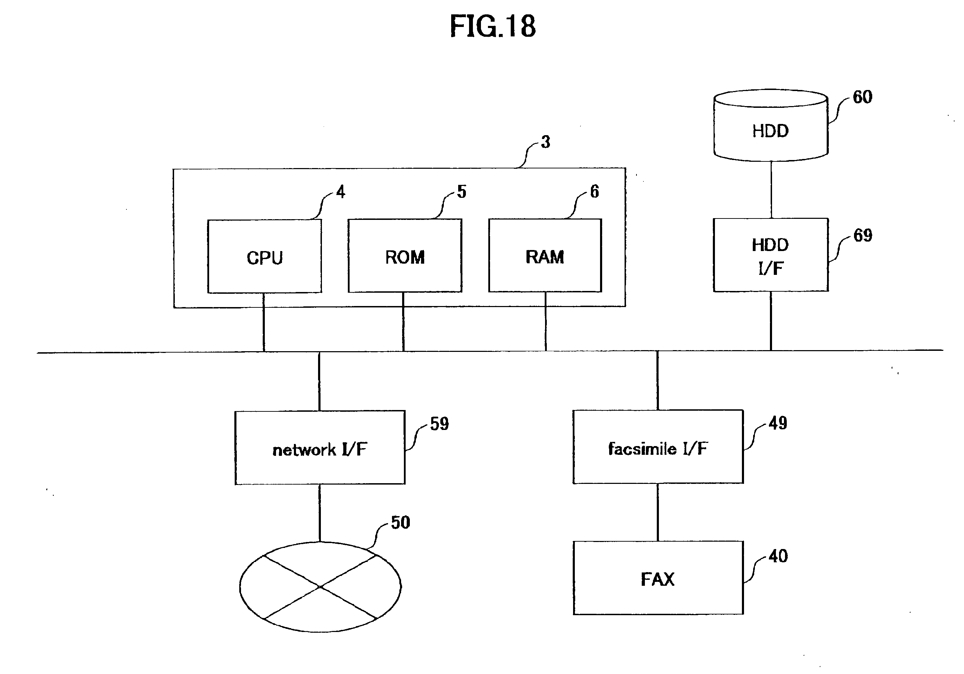

FIG. 18 is a block diagram illustrating a computer for executing the image processing method of the present embodiment.

As shown in FIG. 18, a main processor 3 of the computer is connected to the facsimile machine 40, the network 50, and the storage device 60 through a facsimile I/F 49, a network I/F 59, and a storage device I/F 69, respectively.

The main processor 3 of the computer executes the image processing method of the present embodiment, and includes a CPU 4, a ROM 5, and a RAM 6. The CPU 4 reads out and executes programs stored in the ROM 5, thereby realizing the image processing method of the present embodiment. The CPU 4 also controls the RAM 6 and other peripheral devices.

ROM 5 is the recording medium in which the program of the present invention is stored. RAM 6 is a temporary memory used when CPU 4 executes programs.

Here, the recording medium of the present embodiment is not limited to a ROM, but can be a hard disk, a CD-ROM, a DVD, and any other recording medium that is readable by a computer.

### Other Embodiments of Present Invention

1. An image processing device, comprising:
   an image reading unit configured to read an image to obtain recording information recorded in the image; and
   a processing unit configured to perform processing based on the recording information.
2. The image processing device as 1, wherein the processing unit includes:
   an execution unit configured to execute one or more processes; and
   a process determination unit configured to determine one process to be executed based on the recording information,
   wherein
   the execution unit executes the process determined by the process determination unit.
3. The image processing device as 2, further comprising:
   an image information acquisition unit configured to acquire image information from the recording information; and
   an image additional information acquisition unit configured to acquire image additional information from the recording information.
4. The image processing device as 3, wherein
   the image additional information acquisition unit includes a pattern embedding information extraction part configured to extract, from the recording information, pattern embedding information embedded in a texture pattern.
5. The image processing device as 3, wherein
   the execution unit includes an image transmission information extraction part configured to acquire, from the image additional information, at least one of a transmission address to which the image information is to be transmitted, a title of the image information to be transmitted, and a transmission side address.
6. The image processing device as 3, further comprising:
   an identification information acquisition unit configured to acquire, from the image additional information, identification information used for identifying a position where transmission information is stored, said transmission information including one of a transmission address to which the image information is to be transmitted, a title of the image information to be transmitted, and a transmission side address,
   wherein
   the execution unit includes an image transmission information acquisition part configured to acquire transmission information based on the identification information.
7. The image processing device as 5, wherein
   the execution unit includes a transmission document generation part configured to generate a document to be transmitted based on the transmission address, the title of the image information to be transmitted, or the transmission side address.
8. The image processing device as 3, wherein
   the execution unit includes an image storage information extraction part configured to acquire, from the image additional information, a storage address of the image information, a title or a filename of the image information to be stored, or a name of a manager of the image information.
9. The image processing device as 3, further comprising:
   an identification information acquisition unit configured to acquire, from the image additional information, identification information used for identifying a position where storage information is stored, said storage information including one of a storage address of the image information, a title or a filename of the image information to be stored, or a name of a manager of the image information,
   wherein
   the execution unit includes an image storage information acquisition part configured to acquire storage information based on the identification information.
10. The image processing device as 3, further comprising:
   an additional information extraction part configured to extract, from the image additional information, additional information to be added to the image information; and
   an information adding part configured to add the additional information extracted by the additional information extraction part to the image information.
11. The image processing device as 3, further comprising:
   an additional information position acquisition part configured to acquire, from the image additional information, identification information used for identifying a position where additional information to be added in the image information is stored;
   an additional information acquisition part configured to acquire the additional information stored in the position identified by the identification information given by the additional information position acquisition part; and
   an information adding part configured to add the additional information given by the additional information acquisition part to the image information.
12. The image processing device as 3,
   wherein
   the image additional information acquisition unit acquires image additional information written in a predetermined descriptive language.
13. An image processing method, comprising:
   an image reading step of reading an image to obtain recording information recorded in the image; and
   a processing step of performing processing based on the recording information.
25. An image processing system, comprising;
   an information embedding device; and
   an image processing device,
   wherein
   the information embedding device includes
   a pattern embedding unit configured to embed additional information into a texture pattern of an image to generate recording information,
   the image processing device includes
   an image reading unit configured to read the recording information;
   an image information acquisition unit configured to acquire image information from the recording information;
   a pattern embedding information extraction part configured to extract, from the recording information, pattern embedding information embedded in the texture pattern;
   an execution unit configured to execute one or more processes; and
   a process determination unit configured to determine one process to be executed based on the pattern embedding information.
26. The image processing system as 25,
   wherein
   the execution unit includes an image transmission information extraction part configured to acquire, from the pattern embedding information, at least one of a transmission address to which the image information is to be transmitted, a title of the image information to be transmitted, and a transmission side address.
27. The image processing device as 25,
   wherein
   the image processing device further includes:
   an identification information acquisition unit configured to acquire, from the image additional information, identification information used for identifying a position where transmission information is stored, said transmission information including one of a transmission address to which the image information is to be transmitted, a title of the image information to be transmitted, and a transmission side address,
   wherein
   the execution unit includes an image transmission information acquisition part configured to acquire transmission information based on the identification information.
28. The image processing system as 26,
   wherein the execution unit includes a transmission document generation part configured to generate a document to be transmitted based on the transmission address, the title of the image information to be transmitted, or the transmission side address.
29. The image processing system as 28, further comprising:
   a transmission unit configured to transmit the document generated by the transmission document generation part to the transmission address.
30. The image processing system as 25,
   wherein
   the execution unit includes an image storage information extraction part configured to acquire, from the pattern embedding information, a storage address of the image information, a title or a filename of the image information to be stored, or a name of a manager of the image information.
31. The image processing system as 25, further comprising:
   an identification information acquisition unit configured to acquire, from the image additional information, identification information used for identifying a position where storage information is stored, said storage information including one of a storage address of the image information, a title or a filename of the image information to be stored, or a name of a manager of the image information,
   wherein
   the execution unit includes an image storage information acquisition part configured to acquire storage information based on the identification information.
32. The image processing system as 30, further comprising:
   a storage unit corresponding to the storage address.
33. The image processing system as 25,
   wherein the pattern embedding information extraction part acquires the pattern embedding information written in a predetermined descriptive language.
While the present invention is described with reference to specific embodiments chosen for purpose of illustration, it should be apparent that the invention is not limited to these embodiments, but numerous modifications could be made thereto by those skilled in the art without departing from the basic concept and scope of the invention.
This patent application is based on Japanese Priority Patent Application No. 2005-380492 filed on December 28, 2005, the entire contents of which are hereby incorporated by reference.

## Claims

1. An image processing device, comprising:
an image reading unit configured to read a manuscript including image information and additional information related to the image information;
an extraction unit configured to extract the image information and the additional information from manuscript image data of the manuscript; and
a processing unit configured to perform processing on the image information based on the additional information.

2. The image processing device as claimed in claim 1, wherein
the additional information is formed from a predetermined pattern, and
the extraction unit separates the predetermined pattern from the manuscript image data to extract the additional information.

3. The image processing device as claimed in claim 1 or 2, wherein
the additional information is visually perceivable, and
the processing unit removes the additional information from the manuscript image data.

4. The image processing device as claimed in claim 1, 2 or 3, wherein
the additional information includes recipient address information indicating a recipient address, and
the processing unit transmits the image information extracted by the extraction unit or the image information processed by the processing unit to the recipient address indicated by the recipient address information.

5. The image processing device as claimed in in any one of claims 1 to 4, further comprising:
a storage unit configured to store the additional information and recipient address information indicating a recipient address, the additional information being stored in connection with the recipient address information; and
a recipient address information acquisition unit configured to acquire the recipient address information from the storage unit,
wherein
the processing unit transmits the image information or information based on the image information to the recipient address indicated by the acquired recipient address information.

6. The image processing device as claimed in any one of claims 1 to 5, wherein the additional information includes a title of the image information.

7. The image processing device as claimed in any one of claims 1 to 6, wherein
the additional information includes masking information of masking processing on the image information, and
the processing unit carries out the masking processing on the image information based on the additional information.

8. The image processing device as claimed in any one of claims 1 to 7, further comprising:
a relevant information acquisition unit configured to acquire relevant information of the image information based on storage address identification information, said storage address identification information being included in the additional information for identifying an address for storing the relevant information of the image information, and
wherein
the processing unit adds the relevant information to the image information and outputs resulting data.

9. An image processing method, comprising:
an image reading step of reading a manuscript including image information and additional information related to the image information;
an extraction step of extracting the image information and the additional information from manuscript image data of the manuscript; and
a processing step of performing processing on the image information based on the additional information.

10. The image processing method as claimed in claim 9, wherein
the additional information is formed from a predetermined pattern, and
in the extraction step, the predetermined pattern is separated from the manuscript image data to extract the additional information.

11. The image processing method as claimed in claim 9 or 10, wherein
the additional information is visually perceivable, and
in the processing step, the additional information is removed from the manuscript image data.

12. The image processing method as claimed in claims 9, 10 or 11, wherein
the additional information includes recipient address information indicating a recipient address, and
in the processing step, the image information extracted in the extraction step or the image information processed in the processing step is transmitted to the recipient address indicated by the recipient address information.

13. The image processing method as claimed in any one of claims 9 to 12, further comprising:
a recipient address information acquisition step of acquiring recipient address information indicating a recipient address from a storage unit which stores the recipient address information with the recipient address information being stored in connection with the additional information, and
in the processing step, the image information or information based on the image information is transmitted to the recipient address indicated by the acquired recipient address information.

14. The image processing method as claimed in any one of claims 9 to 13, wherein the additional information includes a title of the image information.

15. The image processing method as claimed any one of claims 9 to 14, wherein
the additional information includes masking information of masking processing on the image information, and
in the processing step, the masking processing is performed on the image information based on the additional information.

16. The image processing method as claimed in any one of claims 9 to 15, further comprising:
a relevant information acquisition step of acquiring relevant information of the image information based on storage address identification information, said the storage address identification information being including in the additional information for identifying an address for storing the relevant information of the image information, and
in the processing step, the relevant information is added to the image information, and resulting data is output.

17. A computer program comprising program code means which, when executed on a computer system, instructs the computer system to effect the method of any one of claims 9 to 16.

18. A computer-readable recording medium having recorded thereon program code means which, when executed on a computer system, instructs the computer system to effect the method of any one of claims 9 to 16.
